(19) Europäisches Patentamt
European Patent Office
Office européen des brevets

(11) Publication number: 0 362 872 B1

(12) # EUROPEAN PATENT SPECIFICATION

(45) Date of publication of patent specification: 22.12.93 (51) Int. Cl.5: C08L 67/02, H01B 3/42

(21) Application number: 89118593.6

(22) Date of filing: 06.10.89

(54) **Polybutylene terephthalate moulding compositions with an improved flowability.**

(30) Priority: 07.10.88 JP 254544/88

(43) Date of publication of application:
11.04.90 Bulletin 90/15

(45) Publication of the grant of the patent:
22.12.93 Bulletin 93/51

(84) Designated Contracting States:
CH DE FR GB IT LI

(56) References cited:
US-A- 4 140 669

PATENT ABSTRACTS OF JAPAN vol. 009, no. 180 (C-293) 25 July 1985, & JP-A-60 049055

PATENT ABSTRACTS OF JAPAN vol. 006, no. 015 (C-089) 01 January 1982, & JP-A-56 139551

(73) Proprietor: SUMITOMO WIRING SYSTEMS, LTD.
1-14, Nishisuehiro-cho
Yokkaichi City Mie 510(JP)

(72) Inventor: Yasuhiko Onishi
39-4, Kosora-cho
Seto City Aichi 489(JP)
Inventor: Yoshinobu Kubo
1-18, Takahanadaira
3-chome Yokkaichi City
Mie 510(JP)
Inventor: Takao Nozaki
88-11, Torii-cho
Tsu City Mie 514(JP)

(74) Representative: KUHNEN, WACKER & PARTNER
Alois-Steinecker-Strasse 22
D-85354 Freising (DE)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Thermoplastic polyester compositions comprising at least two groups of polybutylene terephthalate with substantially different intrinsic viscosity values and conventional additives for mouldings are disclosed.

The polymer compositions show an improved thermal flow capability under moulding conditions expressed in such indices as heat flow(m cal/sec), enthalpy change ΔHm(Joule/gr) at the solidification of fused polymer, crystalline fraction (Xc), the time of growth $t_o$ (sec) of the primary nuclei of embryonic crystalline. The polymer compositions of the present invention results in a larger size of crystalline than the case of independent, single polymer and this enables to carry out injection moulding at about 20 degrees lower cylinder temperature than usual moulding practice without sacrifysing mechanical and thermal properties of the product.

### FIELD OF THE INVENTION

The moulding compositions of the present invention are especially suitable for manufacture of precision moulded products where polybutylene terephthalate is used due to excellent thermal and dimensional stability which are necessitated in automotive and electronic industries.

The inherent high flowability of the polymer compositions of the present invention under moulding condition is most typically demonstrated in the manufacture of electrical connector housings, fuse boxes and relays and switches.

### PRIOR ART

In U.S.-A-4,749,755 there are disclosed thermoplastic polyester compositions of low melt viscosity consisted of [I] polyalkylene terephthalates, [II] small quantity of polycarbonate and optionally, [III] customary additives.

It is also mentioned that some behaviour in hot air aging ( dimensional stability at elevated temperatures ) is improved by the reference invention.

The invention of U.S. Patent 755 of Buyschet et al described that the flowability in the melt is improved markedly( up to about 45% )by relatively small weight fractions of polycarbonate [II] ( 0.5 to 15% by weight of polycarbonate ) without significant adverse effects on the physical properties of moulded products.

The rate of crystallization of aromatic polyester was measured by Gilbert et al utilizing differential thermal analyzer. They concluded that the rate of crystallization is strongly dependent upon their aromatic structures. ( polymer, Vol. 13, 327~332, 1972)

Gutzow et al studied the induction period of polythylene terephthalate and found that the period of crystallization is strongly influenced by the presence of small metallic particles.
( Journal of Polymer Sci, 1155, Vol 16, 1978 )

### SUMMARY OF THE INVENTION

Polybutylene terephthalate (hereafter described as PBT) is one of the most widely used polyalkylene terephthalates and is finding new applications in the field of precision moulding products such as electrical connector housing, relay ,and fuse boxes for automobile industry.

The desirable inherent characteristics of PBT are good thermal distortion, dimensional stability ,impact strength ,and resistance to conventional chemicals and solvents.

Recent development of micro-electronics also urges wiring harness for automotive use to incorporate larger numbers of insulated wires within than before in a set of harness and accordingly multi-connecting, reliable and compact light weight connector housing is required.

In addition, latching means for connection proof and water-repellency for protecting electrical terminals in a housing have become essential in order to ensure reliability of connections.

PBT moulding composition is required to afford thin-walled, light weight electrical housing with reasonable price and this can only be accomplished by selecting a moulding compositions with balanced properties of a) high flowability b) easy release from the mould surface and c) good thermal and mechanical properties of the product.

To achieve above described balance of properties a polybutylene terephthalate moulding compounds including relatively low molecular weight PBT resins are used and this generally provides a moulded product with inferior degree of mechanical properties such as impact strength and tensile strength.

As described previously, U.S.Patent 4,749,755 discloses an impact-resistant polyester compositions of low melt viscosity by preparing mixtures of polyalkylene terephthalate and aliphatic polycarbonates such as polyhexamethylene carbonates with various end growps, OH numbers,and molar masses.

It is described that the flowability in the melt is also improved by the reference invention of Buysch et al.

The main object of the present invention is to provide a PBT moulding composition with excellent balance of thermal and mechanical properteis and moreover high degree of flowability in the melt which provides a housing manufacturers with an advantageous moulding conditions at the reasonable manufacturing cost.

The above disadvantages of polybutylene terephthate is solved by using at least two polybutylene terephthalate resins having different intrinsic viscosity values such as 0.70 to 0.92 for resin(A) and 0.93 to 1.40 for resin(B) expressed in dl/gr specifically.

The compositions of PBT resins of the present invention are explained in details by referring to the Figures and Tables.

PBT resins are generally prepared by polycondensation of aliphthatic diols and dimethyl terephthalate-(DMT). Although 1,4-butane diol is most widely used among diols, ethylene glycol, 1,3-propane diols can be used. Other dibasic carboxilic acid esters can be used with DMT vis versa. As it is inherrent to a compound with esterlinkage. PBT is also liable to be hydrolized in the presence of water. It is understood, therefore, that hydrolysis of PBT resins and re-condensation of polymers may occure resulting a polymer with higher degree of condensation and with different molecular weight distribution.

The hydrolysis-polycondensation can be schematically expressed in equation (1).

$$\underset{(A)}{HO[OC\,ArCOORO]_m H} + \underset{(B)}{HO[OC\,ArCOORO]_n H} \rightleftharpoons \underset{(C)}{HO[OC\,ArCOORO]_{m+n}} + H_2O \quad (1)$$

From the above equation, molecular structure of the PBT resin(C) is affected by the presence of water in original resins of (A) and (B),and this influences the degree of condensation of PBT under process or molecular weight distribution of the total composit system containing (A) and (B).

Another important reaction which will take place under the melt is ester exchange between polymer (A) and polymer (B) which leads to a polymer composition with another molar distribution.

The second schematical reaction is expressed in equation(2).

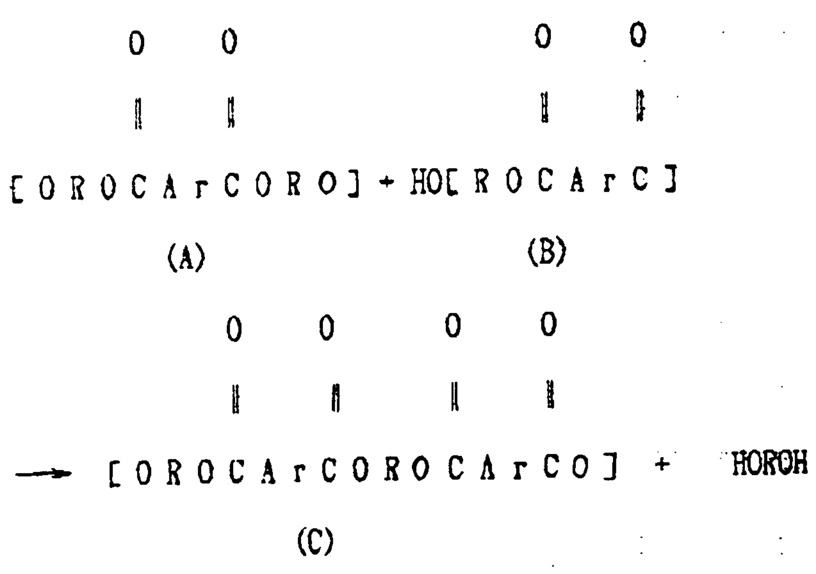

(2)

Accoring to the equation(2) number average molecular weight Mn is unchanged, while weight average molecular weight Mw become large and ratio of Mw/Mn reaches a specific value under given condition.

In an ideally progressed stage of reaction under the melt, it is known that Mw/Mn is approximately 2 in polyalkylene terephthalate polymers having homogeneaus molar structure.

When two polymer groups of PBT(A) and PBT(B) with different molecular weight distributions are included in a composition and are subject to moulding practice, they show one molar distribution as illustrated below and ratio of Mw to Mn is around 2 as expressed in equation (3).

$$Mw / Mn = 2 \qquad (3)$$

The second basic principle under consideration is crytallization rate and size of crystal.

Crystallization of PBT in a mould with chilling means is regarded as an isothermal phenomenon and degree of crystallization X is expressed by Avrami's quation (4).

$$X = 1 - \exp(- K t^n) \qquad (4)$$

Where
- X is degree of crystallization
- K is overall kinetic of crystallization
- t is time
- n is Avrami's Number

Overall kinetices of crystallization K in the equation (4) is expressed as follows:

$$K = (\pi/3)\, IG^3 \qquad (5)$$

Where
- I is rate of growth of crystallization nucleus
- G is radial rate of crystal growth

Under rapidly enforced chilling condition in a moulding practice under discussion. PBT is proven to provide spherulite and therefore G is a constant and I has also a specific value throughout composition even though grow rate becomes somewhat higher by the presence of fillers than that without them.

When the spherulite of PBT grows homogeneously throughout compositions in the mould, value of n in equation (4) is 4 and then degree of crystallization X is governed by product of rate of growth of nucleus, radial rate of crystal growth, and fourth power of temperature.

Close observation of solidification of PBT and PBT compositions for moulding indicates that solidification time ts is given by the following equation:

$$ts = t_o + tc \qquad (6)$$

Where
- $t_o$ is an induction period
- tc is the time for growth of crystallization

It should be mentioned that the overall kinetics of crystallization K in equcation (5) only deal with tc in equation (6) and the induction time $t_o$ is regarded as an independently required time.

In other words the time of primary nucleation during which growth of primary nuclei takes place becomes an important factor. In any case of the experiments using PBT(A), (B), and their combination(C) the induction time $t_o$ were about three times larger than tc.

The rate of growth of primary crystallization J is expressed as in the equation (7)

$$J = \Omega \exp(- \Delta Ge/RT) \qquad (7)$$

Where
- $\Delta$ Ge is energy of conversion from cluster under temperature depression $t_o$ an embryonic crytalline
- R is universal gas constant
- T is temperature of the phase K degree
- $\Delta$ Ge is expressed as a function of surface energy of crystalline ô by equation (8)

$$\Delta Ge \propto \delta^3 (\Delta T \cdot T)^{-2} \qquad (8)$$

Where

T is temperature of the phase in K degree

ΔT is temperature depression in K degreee

The diameter of spheric embryonic crystalline r is given as follows:

$\gamma \delta \Delta T / T$ (9)

From equations (7),(8), and (9) it is deduced that the rate of growth of primary crystallization J is retarded when the surface energy $\delta$ of crystalline under embryonic stage becomes large.

It is understood that the radius of crytalline tends to become large under the same condition and thus large spherulite is resulted when PBT polymers with different molar distribution as indicated by different values of intrinsic viscosity are present in the melt and when a randum structures of polymer takes place by previously described factors such as hydrolysis/polycondensation, ester exchange reaction all of which result in an increase of surface energy $\delta$ of resulting spherulite.

Transition of two molar distribution of two PBT polymers into one, common fraction in the melt is illustrated in Fig 1.

## PREFERRED EMBODIMENTS OF THE INVENTION

The delayed solidification and large size of crystalline caused by an increase of surface energy of embryonic crystalline nucleus are now achieved through combination of PBT resins with substantially different values of intrinsic viscosity[$\eta$].

The preferred embodiments of the present invention are described in details.

### [ I ] Induction time ($t_o$ )and crystallization time (tc)

### [IA] PBT polymer characteristics

Two PBT polymer samples [A],[B] were taken for the experiments.

Polymer probe [A] and [B] had different intrinsic viscosity values of $[\eta]_A$ = 0.85(dl/g),and $[\eta]_B$ = 0.92(dl/g) respectively.

They were both in a pelletized form and their equal amount in weight were throughly blended.

The resulting blend polymer probe [C] was also taken for the experiment.

The intrinsic viscosity of polymer probes [A] and [B] were both measured at 30°C in a mixture of tetrachlorethane and phenol in 40/60 parts by weight.

Time for crystallization of polymer probe [A],[B] and [C] were observed utilization a polarlyzing microscope( Nikon Microphotometer Type FX of Nippon Kogaku Corp,Japan ) with a hot stage ( Mettler FP-80,FP-82 ).

Small portion of each polymer probe was taken and placed on a slide glass and was covered with a piece of covering glass.

The polymer probe was transferred onto the hot stage and was heated until the temperature of the hot stage reached 270°C and was maintained for about 3 minutes.

After the polymer probe under heat was thoroughly melted, the polymer probe was quickly transferred on another hot stage which had been warmed at 60°C and changes of the amount of light which passed through the polymer probe were observed.

The induction time or initiation time ($t_o$ ) and crystallization time (tc) were summarized in Table 1.

It was observed that improved flowability of molten polymer during the process of primary stage of crystallization was achieved by utilizing a polymer composition(C) instead of using (A) or (B) indendently.

Table 1

Solidification Time of PBT

(secounds)

| PBT resins | $t_0$ | $t_{1/2}$ | tc |
|---|---|---|---|
| (A) | 5.10 | 0.75 | 1.73 |
| (B) | 5.30 | 0.95 | 2.13 |
| (C) | 6.17 | 0.88 | 1.97 |

Note:

(1) $t_0$ (sec) : induction time for crystallization

(2) $t_{1/2}$ (sec) : 50% crystallization time

(3) tc(sec) : crystallization time

It should be also mentioned that in all polymer probe of PBT the induction time ( $t_o$ ) is about three times longer as the crystallization time (tc) and that overall period necessary for solidification of PBT polymer in the melt is determined by ( $t_o$ ), not by (tc).

[ IB ] PBT Compositions for moulding purpose

A practical composition of PBT resin for moulding purposes usually contains releasing agent in order to help easy release of formed product from the surface of mould.

Typical releasing agents are montan acid salts or its partially esterified homologues and their fractions in a PBT moulding resin composition are usually from about 0.01 to about 2.0 percent by weight.

Montanic acid is a given name for mixture of aliphatic monocarboxlic acids with 26 t0 32 carbon atoms.

The acid mixture is converted to its metallic salts through neutralization by oxides or hydroxides of metals which are found in the growp I, II and III of periodic table.

The partially esterified products of montanic acid and thier metallic salts are obtained by reacting the acid with aliphatic diols such as ethylene glycol, 1,2 or 1,3-propane diols, 1,3 or 1,4-butane diols in a way that equivalent ratio of OH/COOH does not exceed 0.9.

The resulted ester with acidial residue is neutralized as described in the case of acid salts to provide montanic acid ester salts of metals.

Two PBT polymer samples (A)p and (B)p were taken from production lot(A) and lot(B) respectively.

The intrinsic viscosity of PBT polymer in lot(A) ranged from 0.70 to 0.92(dl/g) measured at 30 °C in a mixture of 40/60 parts by weight of tetrachlorethane/phenol, while the intrinsic viscosity of the polymer in lot(B) ranged from 0.93 to 1.40 (dl/g) measured under the same condition as in the case of lot(A).

The polymer sample (C)p was 50/50 weight mixture of polymer samples (A)p and (B)p and the fourth sample (D)p was another mixture consisting 70 parts by weight of (A)p and 30 parts by weight of (B)p.

In order to observe the effect of releasing agents sodium ester of montan acid was selected and 0.3 parts by weight of the ester was added to the total compositions. The formulated composition was named (D)p.

They were, for instance, composition(A)c which contains 99.7 parts by weight of polymer sample (A)p and 0.3 parts by weight of the releasing agent and the other three compositions of (B)c, (C)c and (D)c were formulated in the same manner.

Compositions (A)c,(B)c,(C)c,and (D)c were brought into molten stage at 270 °C and both the induction time ($t_o$ ) and crystallization time (tc) were measured in the same manner as described previously by utilyzing polarizing microscopic method at 60 °C.

Additionlly photographs in Fig2 of resulting spherulites were taken in order to measure their sizes.

The results of the experiments were summarized in Table 2.

The differential scanning calorimetric analysis was carried out for the four PBT resins. The resin composition (C)p consisting of PBT resins (A)p and (B)p with two different ranges of intrinsic viscosity values of [$\eta_A$], [$\eta_B$] in equal amount in weight had the maximum heat flow point at 183.6 °C which was lowest among those for remaining other compositions. The results are shown in Fig3.

Table 2

| Solidification Time and Size of PBT Moulding Compounds | | | | |
|---|---|---|---|---|
| Moulding Compositions | Time in seconds | | | |
| | $t_o$ | $t_{1/2}$ | t c | r |
| (A) c | 5.03 | 0.73 | 1.73 | 1~5 |
| (B) c | 4.87 | 0.35 | 0.88 | 1~5 |
| (C) c | 5.25 | 0.45 | 0.94 | 3~10 |
| (D) c | 5.08 | 0.42 | 0.88 | 1~5 |

Note:
(1) $t_o$ (sec) :induction time for cystallization
(2) $t_{1/2}$ (sec) : 50% crystallization time
(3) tc(sec) : crystallization time
(4) r ($\mu$) : Size of spherulite

It was observed that longer induction time were resulted for sample (C)c and (D)c than in the case of (A)c and (B)c where PBT polymers were used independently.

Polymer sample (B)p having higher value of intrinsic viscosity made contribution to shorten the period of crystallization.

The size distribution of spherulite was markedly raised in case of (C)c where two polymer samples (A)p, (B)p were blended in equal weight of 50/50.

It was concluded that effect of other ingredients other than PBT resins over flowability of the total composition was negligible if the amount of the ingredients were controlled.

In the foregoing example, polymer sample(A)p had an intrinsic viscosity ranging from 0.70 to 0. 92(dl/g) at 30 ° C in 40/60 parts by weight mixure of tetrachlorethane phenol and intrinsic viscotity range of polymer sample (B)p were 0.93 to 1.40(dl/g) measured in the same manner.

When total amount of PBT resins are 100 parts by weight, the amount of polymer(A)p should not be more than 95 parts by weight and also should not be less than 5 parts by weight.

The most preferred fraction(fa) of polymer (A)p in the compositions is:

$10 < fa < 90$ (10)

If the amount of polymer (A)p exceeds 95 parts by weight, mechanical properties of moulded products are adversely affected while if it is less than 5 parts by weight, flowability of compositions in the melt is reduced.

[II] Properties of moluded products

[IIa] Preparation of PBT moluding compositions

Preparation of PBT moluding compositions was carried out according to the conventional method.

For instance PBT resins with different intrinsic viscosity values were commercially available. Those resins, releasing agents such as montan acid derivatives, heat stabilizers, lubricants, pigments, UV stabilisers, antioxidants and plascitizers such as butylamide of benzene sulfonic acid or, .2-ethylhexl-p-hydroxybenzoate were mixed together by suitable mixing equipment such as Henshell Mixer or Tumbler and were fed to an injection machine with screws to provide a composit material in a pellet form.

Fillers were not essential to the PBT compositions of the present invention. Those material selected from inorganic organic particles, or fibers could be used if presence of such fillers was not liable to provide some adverse effects in terms of flowability and rate of crystallization of the system.

[IIb]PBT moulding compositions

The PBT moulding compositions for automotive electrical connector housing are listed in Table 3 and Table 4.

Example 1 to 5 are typical compositions for precision PBT connector housing consisted of two kinds of PBT resins, a releasing agent, and a heat stabilizer.

In Table 3 Examples 1,4 and 5 are combination of two PBT resins in a substantially equal amount in weight. Example 2 is a 70/30 combination and remaining Example 3 is a blend of 80/20.

There are another five compositions for the purpose of evaluation of each of the ingredients, namely PBT resins with low and high molar distribution respectively (Example 6, 7 and 8) releasing agent (Example 9) and a filler (Example 10). Their formulations are listed in Table 4.

Compositions of Example 1 ~ 5

Table 3

( Parts by weight )

| Component | Grade | Weight Ratio | | | | |
|---|---|---|---|---|---|---|
| | | 1 | 2 | 3 | 4 | 5 |
| PBT resin | [7]=0.85 (A) | 50.0 | 70.0 | 80.0 | 49.7 | 50.0 |
| | [7]=0.92 | — | — | — | — | — |
| | [7]=1.00 (B) | 49.4 | 29.4 | — | 49.4 | 49.4 |
| | [7]=1.15 | — | — | 19.4 | | — |
| releasing agent | A | 0.3 | 0.3 | 0.3 | 0.6 | |
| | B | — | — | — | — | 0.3 |
| heat stabilizer | irganox | 0.3 | 0.3 | 0.3 | 0.3 | 0.3 |
| filler | talc | — | — | — | — | — |
| total | — | 100 | 100 | 100 | 100 | 100 |

Compositions of Example 6-10

Table 4

( Parts by weight )

| Component | Grade | Weight Ratio | | | | |
|---|---|---|---|---|---|---|
| | | 6 | 7 | 8 | 9 | 10 |
| PBT resin | (A) [η]=0.85 | 99.4 | — | — | 50.0 | 50.0 |
| | (A) [η]=0.92 | — | 99.4 | — | — | — |
| | (B) [η]=1.00 | — | — | | 49.7 | 49.7 |
| | (B) [η]=1.15 | — | — | 99.4 | — | — |
| releasing agent | A | 0.3 | 0.3 | 0.3 | — | 0.3 |
| | B | — | — | — | — | — |
| heat stabilizer | irganox | 0.3 | 0.3 | 0.3 | 0.3 | 0.3 |
| filler | talc | — | — | — | — | 0.3 |
| total | — | 100 | 100 | 100 | 100 | 100 |

As described previously intrinsic viscosity [η] was measured at 30 °C in 40/60 mixture of tetrachlorethane/phenol by weight ratio.

Releasing agent A is sodium salt of montan acid and releasing agent B is calcium salt of partial ester of montan acid.

Filler used in Example 10 is talc powder.

Irganox is a heat stabilizer manufactured by Ciba Geigy AG, Switzerland.

Preparative method of the PBT mouding compositiond and mouding operations for test pieces and connector housing were not essential themselves in the present invention, but were carried out by conventinal methods.

In Example 1 the four ingredients were mixed together and fed to an extruder with an extrusion screw of 40mm in diameter and melted homogeneously at 240 °C followed by pelletization.

An injection mouding made by Clause-Maphy apparatus of 3.5 ounces capacity were used to prepare test pieces for evaluation of mechanical and thermal tests and the same apparatus was used to obtain electric connector housing samples for evaluation of flexibility at connector hinge portions, appearance, and degree of release from the surface of the mould.

The solidification phenomena of PBT moulding composition is schematically above in Fig4 where holding time of internal pressure (d) in acavity is the dominant factor for obtaining increased flowability of the resin in a cavity.

In Example 1 temperature at cylinder head of the injection moulder was 260 °C and the mould was preheated at 45 °C.

The conditions of injection moulding were as follows:

injection pressure : 1,400 ~ 500($Kgs/cm^2$)

| | |
|---|---|
| injection speed | : medium rate |
| molding cycle | : 7 cycles/30 sec. |
| test piece A | : moulded as composition was fed. |
| test piece B | : composition was homogeneously blended for five minutes in the cylinder of the injection apparatus before injection took place. |

[III] Evaluation of Mouilded Products

Test pieces for characteristic measurements and a connector housing for wiring harness assembly of autmobile were prepared according to the steps of the conventional moulding process.

Typical steps are shown in schematic diagram (Fig4).

The results of the evaluation are listed in Table 5 an 6 corresponding to the moulding compositionds in the preceding examples.

The standerds of characteristic measrement are:

| Test Item | Standards |
|---|---|
| flexibility | ASTM D-790 |
| Izod impact strength | ASTM D-256 |
| MFR(Melt Flow Rate) | measured at 250 ° C under 325grs weight utilizing Melt-Indexer of Toyo Seiki Works,Japan |

Elongation at low temperature was measured at three stages of thermal conditions using test pieces made from the PBT moulding composition of Example 1.

The results of measurements were listed in Table 7 indicating marked improvement at low temperature.

Table 5

| Testing Item \ Sample Status \ Composition (Example) No. | | Example 1 | Example 2 | Example 3 | Example 4 | Example 5 |
|---|---|---|---|---|---|---|
| flexibility (kgf/cm²) | A | 867 | 861 | 872 | 850 | 865 |
| | B | 871 | 859 | 846 | 815 | 835 |
| impact strength (kgf/cm²) | A | 4.6 | 4.3 | 4.2 | 4.3 | 4.5 |
| | B | 2.6 | 2.3 | 2.5 | 2.2 | 2.7 |
| MFR (g/10mm) | A | 5.6 | 14.5 | 12.5 | 5.9 | 5.8 |
| | B | 15.3 | 25.4 | 20.6 | 17.1 | 16.0 |
| | ratio(B/A) | 2.7 | 1.8 | 1.6 | 2.9 | 2.8 |
| appearance | — | good | good | good | good | good |

Notes:

(1) Composition No is equal to the Example Number in article ( IIb).

(2) Sample status

A: test piece prepared according to the normal steps of injection moulding

B: test pieces prepared after 5 minutes of matuarity in the cylinder of moulding machine followed by injection moulding.

(3) Appearance was evaluated by visual inspection with close attention to the hinge portion of moulded connector housing.

Table 6

| Testing Item \ Sample Status \ Composition(Example) | | Example 6 | Example 7 | Example 8 | Example 9 | Example 10 |
|---|---|---|---|---|---|---|
| flexibility (kgf/cm²) | A | 835 | 848 | 856 | 860 | 843 |
| | B | 762 | 778 | 806 | 823 | 746 |
| impact strength (kgf/cm²) | A | 4.1 | 4.2 | 4.8 | 4.4 | 4.1 |
| | B | 1.2 | 1.5 | 2.6 | 2.5 | 1.0 |
| MFR (g/10mm) | A | 21.5 | 5.3 | 2.5 | 5.7 | 5.3 |
| | B | 69.8 | 24.1 | 9.8 | 15.4 | 23.7 |
| | Ratio(B/A) | 3.2 | 4.5 | 3.9 | 2.7 | 4.5 |
| appearance | — | good | good | | deform-ed | good |

Notes:

(1) Composition No is equal to the Example Number in article ( IIb).

(2) Sample status

A: test piece prepared according to the normal steps of injection moulding

B: test pieces prepared after 5 minutes of matuarity in the cylinder of moulding machine followed by injection moulding.

(3) Appearance was evaluated by visual inspection with close attention to the hinge portion of moulded connector housing.

Table 7

Elongation(%)

| composition / temperature | Example 1 | Commercial Grade (High-Flow Grade) |
|---|---|---|
| 23℃ | 530 | 460 |
| 0℃ | 110 | 87 |
| -20℃ | 46 | 35 |

Improvement of low temperature property.

BRIEF DESCRIPTION OF THE FIGURES

Fig1 show molecular distributions of PBT(A) and PBT(B) having different molar distributions to form one common molar distribution of (A) + (B) = (C).

Fig3 shows crystalline structures of PBT polymer in a mould test pieces.

Fig2 shows differential scanning calorimetric analysis for PBT Polymers.

Fig4 illustrates steps of solidification of PBT polymer in a mould cavity.

## Claims

1. Polybutylene terephthate moulding composition consisting of a releasing agent, a heat stabilizer and at least two polybutylene terephthalate resins selected from two polymer groups [A], [B] having intrinsic viscosity values [$\eta_A$ ] and [$\eta_B$ ] respectively defined as 0,70 < [$\eta_A$ ] <0.92, 093 < [$\eta_B$ ] <1.40 in (dl/gr) unit when measured at 30 °C in a mixture of tetrachlorethane 60 and phenol 40 both in parts by weight; said composition comprises not less than about five (5) parts by weight and not more than 95 parts by weight of the group [A] polybutylene terephthate resins and has a ratio of weight average molecular weight Mw to number average molecular weight Mn of about two (2) after the polybutylene terephthalate resins of groups [A] and [B] are brought into molten stage and are homogeneously blended together.

2. The polybutylene terephthate moulding composition of claim 1 comprising a filler.

3. The polybutylene terephthate moulding composition of claim 1 and/or 2 wherein the moulded product has a spherulite crytalline structure ranging from not less than about three (3) micro meters to not more than ten (10) micro meters in size.

4. The polybutylene terephthalate moulding composition of any of claims 1 - 3 wherein the releasing agent is selected from montan acid dervatives including montan acid metal salts, partially esterified montan acid metal salts.

5. The polybutylene terephthalate moulding composition of claim 4 wherein the metal is selected from these in I, II and III in the periodic Table.

6. The polybutylene terephthate moulding composition of any of claims 1 - 5 wherein the releasing agent is contained about 0.3 parts in weight in total composition.

7. An electrical connector housing made by moulding a polybutylene terephthate moulding composition consisting of a releasing agent a heat stabilizer and at least two polybutylene terephthalate resins selected from two po- lymer groups [A], [B] having intrinsic viscosity values [$\eta_A$ ] and [$\eta_B$ ] respectively defined as 0.70 < [$\eta_A$ ] < 0.92, 0.93 < [$\eta_B$ ] < 1.40 in (dl/gr) unit when measured at 30 °C in a mixture of tetrachlorethane 60 and phenol 40 both in parts by weight; said composition comprises not less than about five (5) parts by weight and not more than 95 parts by weight of the group (A) polybutylene terephthate resins and has a ratio of weight average molecular weight Mw to number average molecular weight Mn of about two (2) after polybutylene terephthalate resins of groups [A] and [B] are brought into molten stage and are homogeneously blended together.

8. The electrical connector housing of claim 7 made by said moulding wherein the polybutelen terephthalate moulding composition comprises a filler.

9. An electrical connector housing of claim 7 and/or 8 wherein spherulite crystallines in the housing are not lest than three (3) micro meters and not more than ten (10) micro meters.

**Patentansprüche**

1. Polybutylenterephthalat-Formmasse, die aus einem Trennmittel, einem Thermostabilisator und mindestens zwei Polybutylenterephthalat-Harzen besteht, die ausgewählt werden aus zwei Polymer-Gruppen [A] und [B], welche intrinsische Viskositätswerte [$\eta_A$] bzw. [$\eta_B$] haben, definiert als 0,70 < [$\eta_A$] < 0,92, 0,93 < [$\eta_B$] < 1,40 in der Einheit (dl/gr), gemessen bei 30 °C in einer Mischung aus 60 Gewichtsteilen Tetrachlorethan und 40 Gewichtsteilen Phenol, wobei die genannte Masse nicht weniger als ca. fünf (5) Gewichtsteile und nicht mehr als 95 Gewichtsteile der Polybutylenterephthalat-Harze der Gruppe [A] enthält und, nachdem die Polybutylenterephthalat-Harze der Gruppen [A] und [B] in geschmolzenen Zustand gebracht und homogen miteinander vermischt wurden, ein Verhältnis von Gewichtsmittel-Molekulargewicht Mw zu Zahlenmittel-Molekulargewicht Mn von ca. zwei (2) hat.

2. Die Polybutylenterephthalat-Formmasse nach Anspruch 1, welche einen Füllstoff enthält.

3. Die Polybutylenterephthalat-Formmasse nach den Ansprüchen 1 und/oder 2, wobei das geformte Produkt eine kristalline Sphärolith-Struktur hat, welche von nicht weniger als ca. drei (3) Mikrometern bis nicht mehr als zehn (10) Mikrometern Größe reicht.

4. Die Polybutylenterephthalat-Formmasse nach einem der Ansprüche 1 - 3, wobei das Trennmittel ausgewählt wird aus Montansäure-Derivaten einschließlich Montansäure-Metallsalzen und teilweise veresterten Montansäure-Metallsalzen.

5. Die Polybutylenterephthalat-Formmasse nach Anspruch 4, wobei das Metall ausgewählt wird aus denen der Gruppen I, II und III im Periodensystem.

6. Die Polybutylenterephthalat-Formmasse nach einem der Ansprüche 1 - 5, wobei das Trennmittel zu ca. 0,3 Gewichtsteilen in der Gesamtmasse enthalten ist.

7. Gehäuse für ein elektrisches Anschlußelement, hergestellt durch die Formung einer Polybutylenterephthalat-Formmasse, die aus einem Trennmittel, einem Thermostabilisator und mindestens zwei Polybutylenterephthalat-Harzen besteht, die ausgewählt werden aus zwei Polymer-Gruppen [A] und [B], welche intrinsische Viskositätswerte [$\eta_A$] bzw. [$\eta_B$] haben, definiert als 0,70 < [$\eta_A$] < 0,92, 0,93 < [$\eta_B$] < 1,40 in der Einheit (dl/gr), gemessen bei 30 °C in einer Mischung aus 60 Gewichtsteilen Tetrachlorethan und 40 Gewichtsteilen Phenol, wobei die genannte Masse nicht weniger als ca. fünf (5) Gewichtsteile und nicht mehr als 95 Gewichtsteile der Polybutylenterephthalat-Harze der Gruppe [A] enthält und, nachdem die Polybutylenterephthalat-Harze der Gruppen [A] und [B] in geschmolzenen

Zustand gebracht und homogen miteinander vermischt wurden, ein Verhältnis von Gewichtsmittel-Molekulargewicht Mw zu Zahlenmittel-Molekulargewicht Mn von ca. zwei (2) hat.

8. Das Gehäuse für ein elektrisches Anschlußelement nach Anspruch 7, durch die genannte Formung hergestellt, wobei die Polybutylenterephthalat-Formmasse einen Füllstoff enthält.

9. Ein Gehäuse für ein elektrisches Anschlußelement nach Anspruch 7 und/oder 8, wobei Sphärolith-Kristalle in dem Gehäuse nicht weniger als drei (3) Mikrometer und nicht mehr als zehn (10) Mikrometer groß sind.

**Revendications**

1. Matière à mouler composée de polytéréphthalate de butylène, comportant un agent de libération, un agent de stabilisation et au moins deux résines de polytéréphthalate de butylène sélectionnées dans deux groupes de polymères [A], [B] présentant respectivement des valeurs de viscosité intrinsèque [$\eta_A$] et [$\eta_B$] définies par 0,70 < [$\eta_A$] < 0,92, 0,93 < [$\eta_B$] < 1,40 en unité (dl/g), lorsqu'elles sont mesurées à une température de 30 °C dans un mélange constitué de 60 parties en poids de tétrachloréthane et de 40 parties en poids de phénol; ladite matière comprenant une quantité au moins égale à à peu près cinq (5) parties en poids et inférieure à 95 parties en poids de résine de polytéréphthalate de butylène du groupe [A] et présentant un rapport entre le poids moléculaire moyen en poids Mw et le poids moléculaire moyen en nombre Mn d'à peu près deux (2), après que les résines de polytéréphthalate de butylène des groupes [A] et [B] aient été mises en fusion et mélangées de façon homogène entre elles.

2. La matière à mouler composée de polytéréphthalate de butylène selon la revendication 1, comprenant un matériau de remplissage.

3. La matière à mouler composée de polytéréphthalate de butylène selon la revendication 1 et/ou 2, dans laquelle le produit mouté a une structure de cristaux de sphérolithe d'une dimension non inférieure à trois (3) micro-mètres et non supérieure à dix (10) micro-mètres.

4. La matière à mouler composée de polytéréphthalate de butylène selon l'une quelconque des revendications 1 à 3, dans laquelle l'agent de libération est sélectionné parmi des dérivés d'acide montanique comprenant des sels métalliques d'acide montanique, des sels métalliques d'acide montanique partiellement estérifiés.

5. La matière à mouler composée de polytéréphthalate de butylène selon la revendication 4, dans laquelle le métal est sélectionné dans les éléments des classes I, II et III du tableau périodique.

6. La matière à mouler composée de polytéréphthalate de butylène selon l'une quelconque des revendications 1 à 5, dans laquelle l'agent de libération constitue à peu près 0,3 parties en poids de la composition totale.

7. Un boîtier de connecteur électrique réalisé par moulage d'une matière à mouler composée de polytéréphthalate de butylène, comportant un agent de libération, un agent de stabilisation et au moins deux résines de polytéréphthalate de butylène sélectionnées dans deux groupes de polymères [A], [B] présentant respectivement des valeurs de viscosité intrinsèque [$\eta_A$] et [$\eta_B$] par 0,70 < [$\eta_A$] < 0,92, 0,93 < [$\eta_B$] < 1,40 en unité (dl/g), lorsqu'elles sont mesurées à une température de 30 °C dans un mélange constitué de 60 parties en poids de tétrachloréthane et de 40 parties en poids de phénol; ladite matière comprenant une quantité au moins égale à à peu près cinq (5) parties en poids et inférieure à 95 parties en poids de résine de polytéréphthalate de butylène du groupe [A] et présentant un rapport entre le poids moléculaire moyen en poids Mw et le poids moléculaire moyen en nombre Mn d'à peu près deux (2), après que les résines de polytéréphthalate de butylène des groupes [A] et [B] aient été mises en fusion et mélangées de façon homogène entre elles.

8. Le boîtier de connecteur électrique selon la revendication 7 réalisé par ledit moulage, dans lequel la matière à mouler composée de polytéréphthalate de butylène comprend un matériau de remplissage.

**9.** Un boîtier de connecteur électrique selon la revendication 7 et/ou 8, dans lequel des cristaux de sphérolithe dans le boîtier présentent un diamètre au moins égal à trois (3) micromètres et inférieur à dix (10) micromètres.

Fig 1

Molar Distribution of PBT Polymers

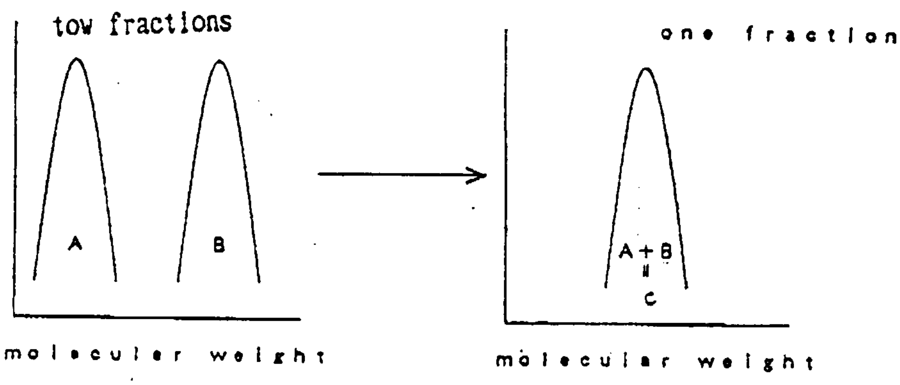


$$\frac{Pw}{Pn} = \frac{1+P}{1} = 2$$

Pw: Degree of weight average polymerization
Pn: Degree of mumber average polymerization
P : Reactive degree

Fig 2

(L) (R)

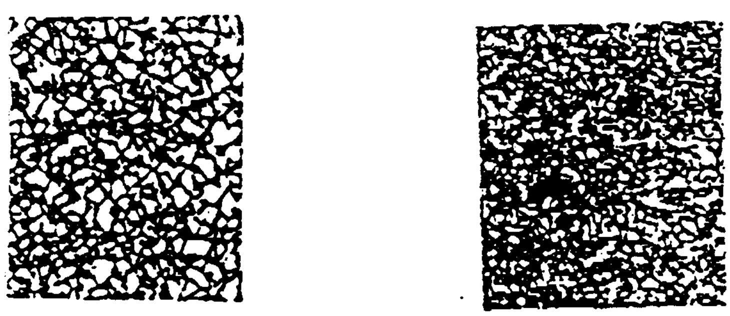

(L) : Spherulite observed at a mould test piece made of composition of Example 1

(R) :Crystalline structure of commercial PBT (High Flow Grade)

Fig 3

Differential Scanning Calorimetry

of PBT Resins

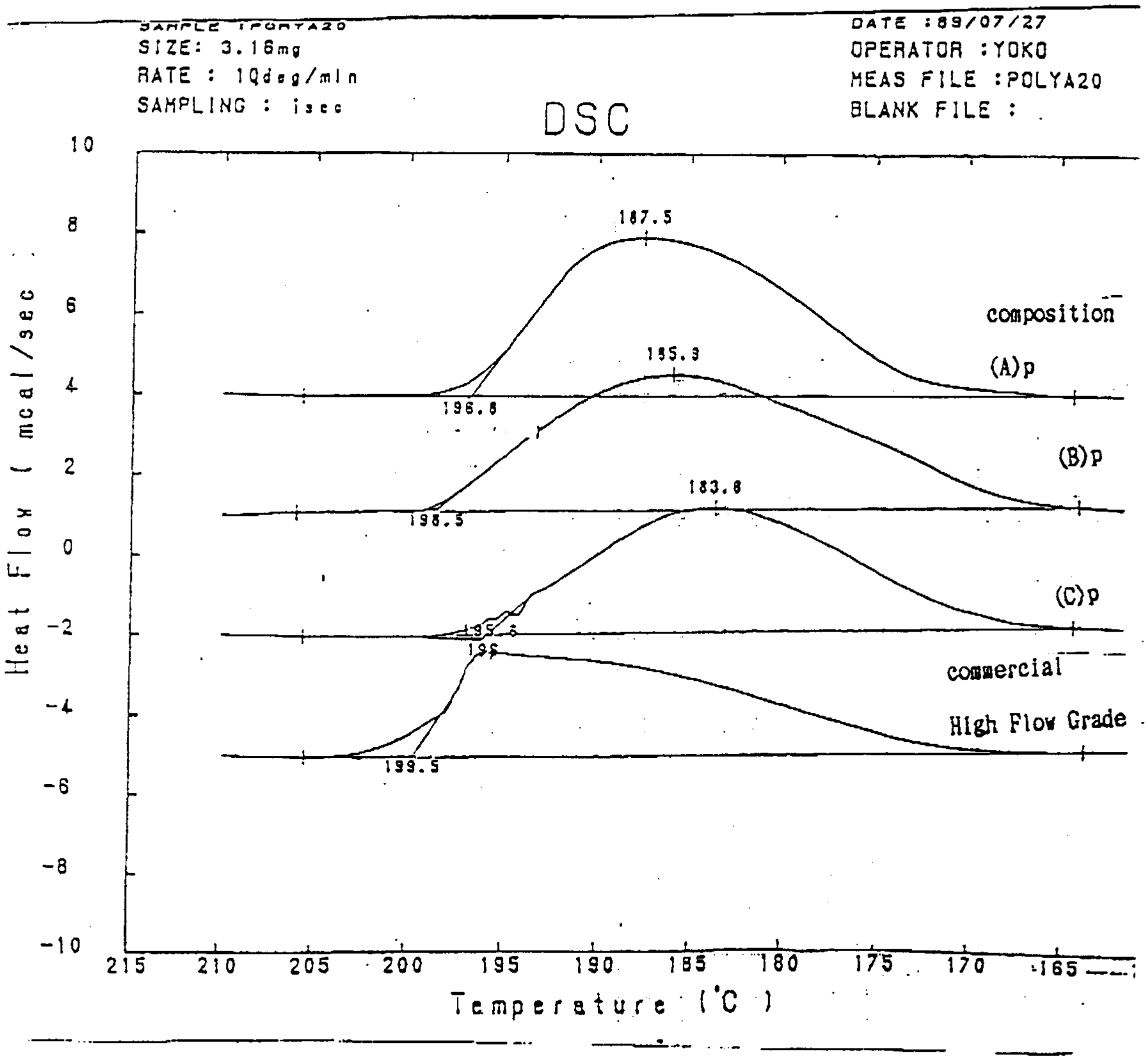

Fig 4

Solidification Behaviour of PBT

Polymers in A Mould Cavity

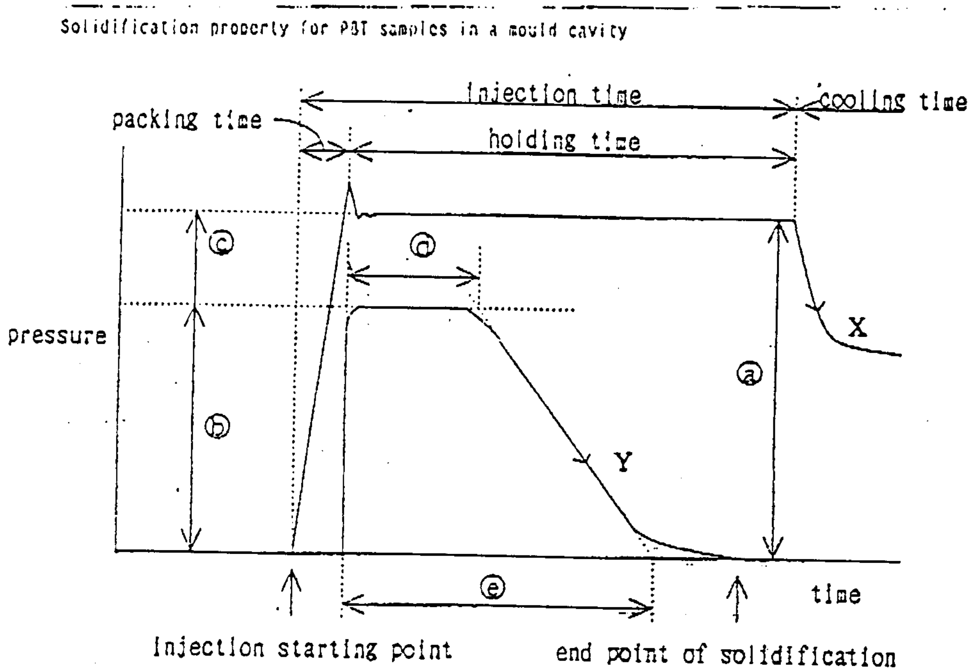


Pressure change in moulding cycle
X : ram oil pressure for injection
y : internal pressure in cavity

Notes:

(a) preset holding pressure

(b) holding internal pressure in a cavity

(c) pressure leakage ( C-a-b )

(d) holding time under internal pressure in a cavity

(e) overall solidification time in a mould cavity

(f) solidification rate